# EUROPEAN PATENT APPLICATION

(11) **EP 4 741 290 A1**
(43) Date of publication of application: **13.05.2026**
(21) Application number: 24383227.6
(22) Date of filing: 11.11.2024
(51) Int. Cl.: B64D 33/10, F28D 1/02, F28D 21/00

(54) **COOLING SYSTEM FOR AIRCRAFTS, AND AN AIRCRAFT TAILCONE COMPRISING SAID COOLING SYSTEM**

(71) Applicant: Airbus Operations, S.L.U., 28906 Getafe, Madrid (ES)
(72) Inventor: MOLINA PARGA, Alberto, 28906 GETAFE (Madrid) (ES); TEJELO MANZANO, Alfonso, 28906 GETAFE (Madrid) (ES); RUIZ-RICO RUIZ, Antonio José, 28906 GETAFE (Madrid) (ES)
(74) Representative: Herrero & Asociados, S.L.

(57) **Abstract**

The present invention refers to a compact cooling system (1) suitable to be installed in an aircraft tailcone (100). Said cooling system comprising a heat exchanger (10), and a fan (20) located inside the heat exchanger (10). Thus, the cooling system (1) integrates both the heat exchanger (10) and the fan (20) within the aircraft's tailcone (100) into a single, cohesive solution, which not only optimizes the available space but also enhances the overall efficiency of the cooling process. Another object of the invention is to provide an aircraft tailcone (100) comprising said cooling system (1).

## Description

### Object of the invention

The present invention belongs to the technical field of cooling systems for aircrafts.

An object of the invention is to provide a compact cooling system suitable to be installed in an aircraft tailcone. Another object of the invention is to provide an aircraft tailcone comprising said cooling system.

### Background of the invention

Aviation industry always aims to reduce weight within the aircraft in order to have potential savings in fuel blocks. Besides, new technologies within aviation are more focused on electrical components which may require larger heat dissipation.

In this regard, thermal management systems (hereinafter as TMS) in aviation are critical for ensuring optimal performance and safety of the aircraft, particularly in modern high-performance aircraft where high power densities lead to significant heat generation. The management of this excess heat is vital, especially in components like avionics, power electronics, and various propulsion systems.

Due to the large amount of heat that needs to be rejected in case of installing a non-gas turbine auxiliary power plant (based on Fuel cell, Internal Combustion Engine, others) a high performance heat dissipation device needs to be integrated within that area. Considering traditional solutions, the typical approach would have been to install a ram air channel to drive and maximize the air mass flow from the external atmosphere through an air-liquid heat exchanger including an axial fan to suck air to cover ground operations (no air speed energy can be considered).

As there is a limited space in the tailcone area, the efficiency and specific fuel consumption (hereinafter as SFC) of the full non-gas auxiliary power plant is key and the air flow required for an air-liquid heat exchanger is huge, this solution requires to have the maximum heat exchange volume with a minimum power consumption.

Therefore, traditional solutions for plate heat exchangers and axial fans embedded in a ram air channel would lead to non-efficient coiling systems and bulky architectures which would lead to considerable weight penalties at aircraft level.

### Summary of the invention

The present invention overcomes the aforementioned drawbacks by providing a compact cooling system suitable to be installed in an aircraft tailcone. Another object of the invention is to provide an aircraft tailcone comprising said cooling system.

The cooling system and the aircraft tailcone according to the present invention are defined in the corresponding independent claims. The dependent claims include further features, that are optional.

The cooling system of the invention comprises a heat exchanger and a fan located inside the heat exchanger. Preferably, both the heat exchanger and the fan define corresponding longitudinal axes, such that the inner dimension perpendicular to the longitudinal axis of the heat exchanger is similar to the outer dimension perpendicular to the longitudinal axis of the fan.

More preferably, both the heat exchanger and the fan are installed such that they share the same longitudinal axial axis. In this way, the heat exchanger and the fan, form a compact system positionable within the tailcone of an aircraft.

Thus, the compact cooling system described herein encompasses both the heat exchanger and the fan, providing an integrated solution within the tailcone of the aircraft. The cooling system of the invention optimizes the volume of the thermal management system (TMS). In this way, an overall reduction in weight is achieved, and consequently a substantial reduction in fuel consumption. In this way, it is possible to eliminate the traditional APU (Auxiliar Power Unit) in the tailcone of an aircraft., and to place the cooling system of the invention in the volume of said traditional APU.

In a preferred embodiment, the heat exchanger comprises micro-tubes. The micro-tubes technology used in the heat exchanger, increases heat transfer between air and coolant, thanks to a larger exchange surface area compared to plate heat exchangers. In other words, these micro-tubes exchangers are highly efficient due to their large heat transfer surface area relative to volume, which makes them well-suited for compact designs where weight and size are constraints, such as in aircrafts. At this point, it is worth mentioning that microtubes heat exchangers have a lower air pressure drop compared with a plate heat exchanger. The heat transfer is due to the passage of cold outside air around the micro-tubes. The coolant heated by the aircraft systems flows through the micro-tubes.

In a preferred embodiment, both the micro-tubes heat exchanger and the fan have a cylindrical configuration. This cylindrical arrangement increases the front surface compared with a planar arrangement for a similar volume. It should be clarified that the term "front surface" here refers to the first surface of the heat exchanger that is perpendicular to the direction of air flow. In other words, it is the surface that comprises the inside diameter of the heat exchanger and the height of the cylinder. This reduces the thickness, i.e. the distance between the internal and the external diameters of the cylindrical heat exchanger, and therefore the air side pressure drop through the heat exchanger. Thus, the larger the front surface is, the more heat transfer, the less thickness of the heat exchanger is needed. Consequently, the fan power required to boost the air through the heat exchanger decreases. It leads to a lower power consumption.

In another preferred embodiment, the fan is a centrifugal radial fan. These fans work by drawing air in through an inlet and forcing it out radially, and more specifically making them effective in drawing air from the inner heat exchanger cavity with a minimum distortion compared with an axial fan, which is ideal for circulating air through heat exchangers or confined spaces within an aircraft.

Furthermore, it is foreseen that the fan can incorporate a control device that controls the fan speed depending on the mass flow of air required to dissipate a certain amount of heat. This control device is based on the heat load liquid inlet temperature. Thus, the control loop increases the fan speed if the inlet temperature of the heat load increases. This control device has to be dimensioned to the worst conditions, which will be in flight at maximum altitude (lower air density).

The sizing of both the heat exchanger and the fan will mainly depend on the thermal rejection requirements, the available space in the tailcone for a given aircraft model.

So, the present invention provides a compact system that integrates both the heat exchanger and the fan within the aircraft's tailcone into a single, cohesive solution, which not only optimizes the available space but also enhances the overall efficiency of the cooling process. By utilizing the airflow generated by the fan in conjunction with the passive heat transfer facilitated by the micro-tube heat exchanger, the system offers a lightweight, space-efficient compact solution which is not currently available in the market, and that maximizes the system efficiency reducing the fuel block of the aircraft.

According to another object of the invention, an aircraft tailcone comprises the compact cooling system described above.

In a preferred embodiment of the aircraft tailcone, it comprises a grid formed by a plurality of ventilation slots distributed along the surface of the aircraft tailcone. This grid on the tailcone surface boosts air from outside to the centrifugal radial fan and then from the tailcone to the outside. It should be noted that the cooling air comes from the grid or from an intake, depending on the air pressure drop requirements.

### Brief description of the drawings

Preferred embodiments of the invention are henceforth described with reference to the accompanying drawings, wherein:
Figure 1.- Shows a section view of an aircraft tailcone incorporating the cooling system of the present invention.
Figure 2.- Shows a perspective view of the cooling system of the invention.
Figure 3.- Shows a side view of the tailcone of an aircraft with a grid on its surface

### Preferred embodiment of the invention

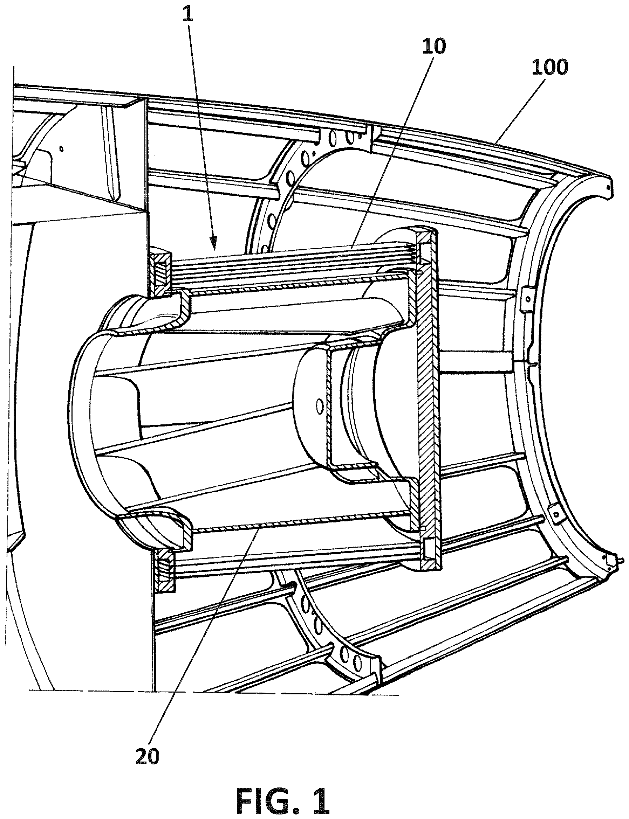

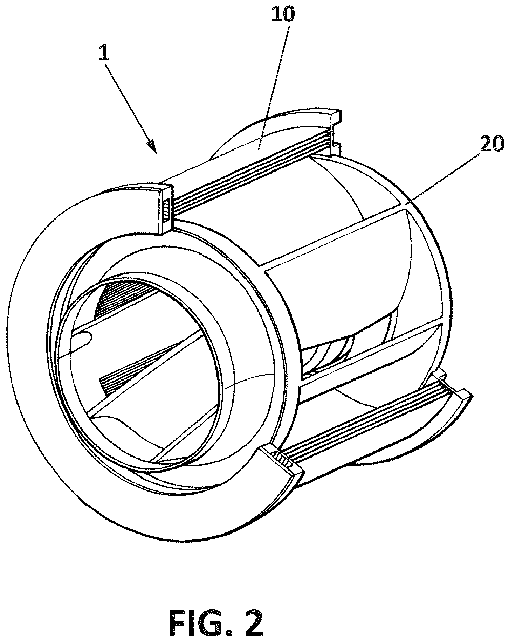

Figures 1 and 2 show a preferred embodiment of the cooling system (1) suitable to be installed in the aircraft tailcone (100), said cooling system comprising:
- a micro-tubes heat exchanger (10), and
- a centrifugal radial fan (20) located inside the heat exchanger (10).

As can be appreciated in figures 1 and 2, the inner diameter of the heat exchanger (10) contacts with the outer diameter of the fan (20), i.e., the inner transversal dimension of the heat exchanger (10) is similar to the outer transversal dimension of the fan (20).

According to a preferred embodiment, both the heat exchanger (10) and the fan (20) have a cylindrical configuration, and are installed such that they share the same longitudinal axial axis, in a horizontal orientation as represented in figures 1 and 2. This particular feature allows to increase the frontal surface area compared to a flat arrangement for a similar volume, reducing the thickness and thus the pressure drop on the air side through the heat exchanger, which ultimately results in a lower power consumption of the fan.

Furthermore, according to a preferred embodiment of the invention, the micro-tubes are arranged longitudinally. This feature allows maximizing the above-mentioned advantageous effects, such as a larger heat transfer surface, higher thermal efficiency, and higher structural strength.

So, both elements, the micro-tubes heat exchanger (10) and the radial fan (20), form a compact system positionable within the tailcone (100) of an aircraft.

As shown in figure 2, the radial fan (20) is located in the inner part of the integrated cooling system (1). It is a machine that pushes air from the axial direction of the fan (20) to the heat exchanger (10).

The heat exchanger (10) is located in the outer part of the integrated cooling system (1). Its inner diameter is next to the outer diameter of the other component, the fan (20). As mentioned above, the heat exchanger (10) uses a micro-tubes technology which increases the heat transfer surface between the micro-tubes fluid and the cooling air.

Although not shown in the figures, it is envisaged that the fan (20) may include a control device to control the fan speed depending on the mass flow of air required to dissipate a certain amount of heat.

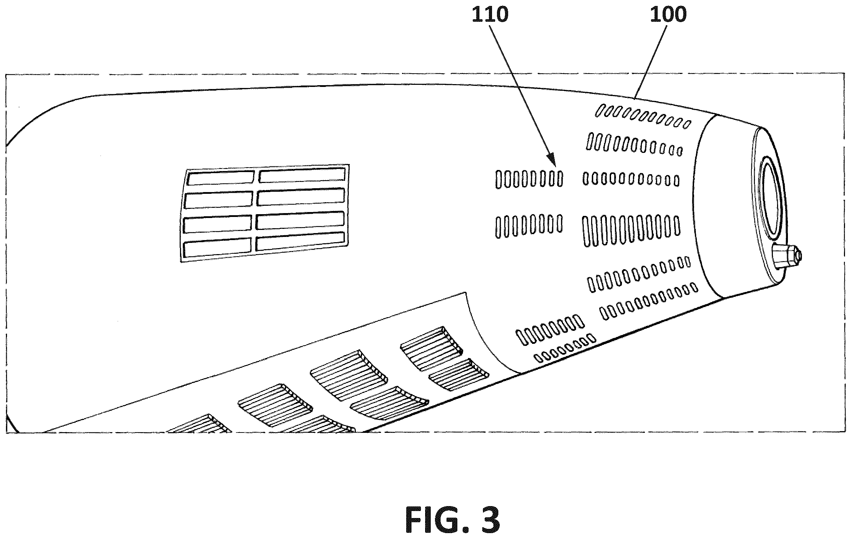

As shown in figure 1, these two components (heat exchanger (10) and fan (20)) are installed in the aircraft tailcone (100), drawing air from one compartment and expelling into another separated compartment. Tailcone's surface has a grid (110), shown in figure 3, which permits the external ambient air enter into the tailcone area and be sucked by the centrifugal radial fan, and then heated air from the heat exchanger (10) to outside.

As shown in figure 3, preferably the grid (110) is formed by a plurality of ventilation slots distributed along the surface of the aircraft tailcone (100).

In the exemplary embodiment of figure 3, the ventilation slots are arranged parallel to each other and oriented transversely and perpendicular to the longitudinal axial axis of the aircraft tailcone (100). This feature not only allows a better and more complete dissipation of the heat inside the tailcone (100), but also allows an improvement in aerodynamic stability, reducing turbulence; a reduction of the internal pressure of the tailcone (100); and an optimization of the structural weight without compromising the structural strength of the aircraft.

The heat dissipation is carried out as follows: The external ambient air enters into the tailcone (100) area, passing the cooling system (1) through the inlet axis of the fan (20), the air passes between the micro-tubes of the heat exchanger (10) to cool the coolant circulating in the micro-tubes, and is 'hot' in the fuselage of the aircraft. Finally, this hot air exits out of the aircraft through the grid (110) on the surface of the tailcone (100).

Therefore, the cooling system (1) of the invention combines the functionality of a cylindrical micro-tube heat exchanger (10) with a radial fan (20) in a compact, efficient unit. This gap in the current state of the art has left room for innovation, especially in reducing the size and weight of thermal management systems (TMS) without compromising performance. The aerospace industry, constantly striving for lighter, more fuel-efficient aircraft, would greatly benefit from a solution that merges these components into a single system capable of both generating airflow and maximizing heat exchange in a confined space such as the tailcone (100) of an aircraft.

## Claims

1. Cooling system (1) for aircrafts, the cooling system (1) comprising:
- a heat exchanger (10), and
- a fan (20) located inside the heat exchanger (10).

2. Cooling system (1) according to claim 1, wherein both the heat exchanger (10) and the fan (20) define corresponding longitudinal axes, such that the inner dimension perpendicular to the longitudinal axis of the heat exchanger (10) is similar to the outer dimension perpendicular to the longitudinal axis of the fan (20).

3. Cooling system (1) according to claim 1 or 2, wherein both the heat exchanger (10) and the fan (20) are installed such that they share the same longitudinal axial axis.

4. Cooling system (1) according to any of the preceding claims, wherein the heat exchanger (10) comprises micro-tubes.

5. Cooling system (1) according to claim 4, wherein the micro-tubes are arranged longitudinally.

6. Cooling system (1) according to any of the preceding claims wherein both the heat exchanger (10) and the fan (20) have a cylindrical configuration.

7. Cooling system (1) according to any of the preceding claims wherein the fan (20) is a radial fan.

8. Cooling system (1) according to any of the preceding claims, wherein the fan (20) comprises a control device to control the fan speed depending on the mass flow of air required to dissipate a certain amount of heat.

9. Aircraft tailcone (100) comprising the cooling system (1) described in any of the preceding claims 1-8.

10. Aircraft tailcone (100) according to claim 9, further comprising a grid (110) formed by a plurality of ventilation slots distributed along the surface of the aircraft tailcone (100).
